# EUROPEAN PATENT APPLICATION

(11) **EP 4 277 005 A1**
(43) Date of publication of application: **15.11.2023**
(21) Application number: 22881391.1
(22) Date of filing: 14.10.2022
(51) Int. Cl.: H01M 50/449, H01M 50/446, H01M 50/403, H01M 10/052, H01G 11/52

(54) **SEPARATOR AND ELECTROCHEMICAL DEVICE COMPRISING SAME**

(30) Priority: 15.10.2021 KR 20210137928
(71) Applicant: LG Energy Solution, Ltd., Seoul 07335 (KR)
(72) Inventor: KA, Kyung-Ryun, Daejeon 34122 (KR); KIM, Min-Ji, Daejeon 34122 (KR); LEE, Seung-Hyun, Daejeon 34122 (KR); KIM, Hye-Won, Daejeon 34122 (KR); SUNG, Dong-Wook, Daejeon 34122 (KR)
(74) Representative: Hoffmann Eitle
(86) International application number: PCT/KR2022/015552
(87) International publication number: WO 2023/063764

(57) **Abstract**

Disclosed are a separator and an electrochemical device comprising same, the separator comprising: a porous polymer substrate having a plurality of pores; a first porous coating layer disposed on one surface of the porous polymer substrate and containing a plurality of first inorganic particles and first binder particles disposed on a part or all of the surface of the first inorganic particles to connect and fix the first inorganic particles; and a second porous coating layer disposed on the other surface of the porous polymer substrate and containing a plurality of second inorganic particles and second binder particles disposed on a part or all of the surface of the second inorganic particles to connect and fix the second inorganic particles, wherein the average diameter of the second binder particles is at least 10-fold larger than the average particle diameter of the first binder particles.

## Description

### Technical Field

The present disclosure claims the benefit of Korean Patent Application Publication No. 10-2021-0137928, filed in the Korean Intellectual Property Office on October 15, 2021, which is hereby incorporated by reference in its entirety into the present disclosure.

The present disclosure relates to a separator having improved dry adhesive strength and wet adhesive strength, a separator available for an electrochemical device such as a lithium secondary battery and the like, and to an electrochemical device including the same.

### Background Art

Recently, interest in energy storage technology is growing. As the fields of application are expanded to mobile phones, camcorders, PC laptops, and even the energy of electric vehicles, efforts in the research and development of electrochemical devices are becoming more and more specific. The field of electrochemical devices is attracting the most attention in this regard, and among the devices, the development of secondary batteries capable of being charged and discharged has become the center of attention. Recently, in terms of developing such batteries, research and development are in progress on novel electrodes and battery design for improvement in capacity density and specific energy.

Of all the currently applicable secondary batteries, lithium secondary batteries, developed in the early 1990s, have been in the spotlight due to the advantage of higher operating voltage and significantly higher energy density than conventional batteries, such as Ni-MH, Ni-Cd, sulfuric acid-lead batteries and the like, using aqueous electrolytes.

Electrochemical devices, such as lithium secondary batteries and the like, are produced by many companies, but the safety characteristics thereof vary. Safety evaluation and safety assurance in such electrochemical devices are substantially important. The most important consideration is that the electrochemical device should not injure a user in case of malfunction. For this purpose, safety standards strictly regulate ignition and smoke in the electrochemical device. Regarding the safety characteristics of the electrochemical devices, when the overheated electrochemical device causes thermal runaway to occur or the separator to be penetrated, there is a high risk of an explosion. Particularly, in the case of polyolefin-based porous polymer substrates commonly used as separators for electrochemical devices, manufacturing process characteristics including elongation and material properties cause extreme heat shrinkage behavior to be exhibited at a temperature of 100 or higher, resulting in short-circuiting between a cathode and an anode.

To solve such safety issues in electrochemical devices, proposed is a separator, in which a porous organic-inorganic coating layer is formed by coating at least one surface of a porous polymer substrate having a plurality of pores with a mixture of an excessive amount of inorganic particles and binder polymers. In the separator including the porous organic-inorganic coating layer, the inorganic particles in the coating layer serve as a sort of spacer capable of maintaining the physical shape of the separator. As a result, shrinkage of the porous substrate is inhibited when exposed to high temperatures, and direct contact between a cathode and an anode thus can be prevented.

However, in the case of a separator including an existing porous organic-inorganic coating layer, a binder resin swells when an electrolyte is injected, resulting in a significant decrease in adhesive strength between the separator and the electrode. In addition, there is a problem of rapid deterioration in the heat resistance of the separator.

### Disclosure

### Technical Problem

A problem to be solved by the present disclosure is to provide an excellent separator for an electrochemical device, the separator having improved dry adhesive strength, wet adhesive strength, and reduced resistance increase after electrode lamination.

Another problem to be solved by the present disclosure is to provide an electrochemical device including the separator.

### Technical Solution

One aspect of the present disclosure provides a separator for an electrochemical device according to the following embodiments.

According to a first embodiment,
provided is a separator characterized by including: a porous polymer substrate having a plurality of pores;
a first porous coating layer disposed on a first surface of the porous polymer substrate and containing a plurality of first inorganic particles and first binder particles disposed on a part or all of the surface of the first inorganic particles to connect and fix the first inorganic particles to each other; and
a second porous coating layer disposed on a second surface of the porous polymer substrate and containing a plurality of second inorganic particles and second binder particles disposed on a part or all of the surface of the second inorganic particles to connect and fix the second inorganic particles to each other,
in which an average diameter of the second binder particles is 10 or more times larger than an average diameter of the first binder particles.

According to a second embodiment, in the first embodiment,
the average diameter of the second binder particles may be 10 to 30 times larger than the average diameter of the first binder particles.

According to a third embodiment, in the first or second embodiment,
the first and second binder particles may be each independently a water-based binder polymer.

According to a fourth embodiment, in any one of the first to third embodiments,
the first and second binder particles may be each independently any one or a mixture of two or more selected from among a polyacrylic polymer, a polyurethane polymer, and a polyvinyl acetate.

According to a fifth embodiment, in any one of the first to fourth embodiments,
the first binder particles may have an average diameter of 0.5 µm or smaller, and the second binder particles may have an average diameter of 5 µm or larger.

According to a sixth embodiment,
provided is a method of manufacturing a separator, the method characterized by including: preparing a first slurry for a first porous coating layer, the first slurry containing a plurality of first inorganic particles, first binder particles, and a first dispersion medium, and a second slurry for a second porous coating layer, the second slurry containing a plurality of second inorganic particles, second binder particles, and a second dispersion medium; and
applying and drying the first slurry on a first surface of a porous polymer substrate to form the first porous coating layer, and applying and drying the second slurry on a second surface of the porous polymer substrate to form the second porous coating layer,
in which an average diameter of the second binder particles is 10 or more times larger than an average diameter of the first binder particles.

According to a seventh embodiment, in the sixth embodiment,
the first slurry may have a viscosity of 15 cp or lower.

According to an eighth embodiment, in the sixth or seventh embodiment,
the second slurry may have a viscosity of 15 cp or lower.

According to a ninth embodiment, in any one of the sixth to eighth embodiments,
in the preparing of the second slurry, the second binder particles and the second dispersion medium contained in the second slurry may be mixed for 2 or more turns.

According to a tenth embodiment,
provided is an electrochemical device including a cathode, an anode, and a separator interposed between the cathode and the anode, in which the separator is the separator of any one of the first to fifth embodiments.

According to an eleventh embodiment, in the tenth embodiment,
the electrochemical device may be a lithium secondary battery.

According to a twelfth embodiment, in the tenth or eleventh embodiment,
the second porous coating layer of the separator may face the anode.

### Advantageous Effects

According to one embodiment of the present disclosure, porous coating layers disposed on both sides of a separator are configured in a different structure, so when laminating the separator and electrodes, dry adhesive strength and wet adhesive strength can be improved.

Specifically, first and second porous coating layers are disposed, respectively, on both sides of the separator. In addition, an average diameter of second binder particles contained in the second porous coating layer is controlled to be 10 or more times larger than an average diameter of first binder particles. As a result, after laminating the separator and the electrodes, an effect of improving both dry adhesive strength and wet adhesive strength can be exhibited.

### Best Mode

Hereinafter, the present disclosure will be described in detail. All terms or words used in the specification and claims have the same meaning as commonly understood by those skilled in the art to which inventive concepts belong. It will be further understood that terms defined in commonly used dictionaries should be interpreted as having a meaning that is consistent with their meaning in the context of the relevant art and will not be interpreted in an idealized or overly formal sense unless expressly so defined herein.

Unless the context clearly indicates otherwise, it will be further understood that the terms "comprises", "comprising", "includes", and/or "including", when used herein, specify the presence of stated components, but do not preclude the presence or addition of other components.

As used herein, it will be understood that when an element is referred to as being "coupled" or "connected" to another element, it can be directly coupled or connected to the other element, or intervening elements may be present therebetween. In addition, the connection implies not only a physical connection but also an electrochemical connection.

A separator for an electrochemical device, according to one aspect of the present disclosure, includes:

a porous polymer substrate having a plurality of pores;

a first porous coating layer disposed on a first surface of the porous polymer substrate and containing a plurality of first inorganic particles and first binder particles disposed on a part or all of the surface of the first inorganic particles to connect and fix the first inorganic particles to each other; and

a second porous coating layer disposed on a second surface of the porous polymer substrate and containing a plurality of second inorganic particles and second binder particles disposed on a part or all of the surface of the second inorganic particles to connect and fix the second inorganic particles to each other,

in which an average diameter of the second binder particles is 10 or more times larger than an average diameter of the first binder particles.

The term "average diameter" used in the present disclosure means an average particle diameter (D50) of the first and second binder particles or the first and second inorganic particles, which may be defined as a 50% particle diameter of particle diameter distribution. In one embodiment of the present disclosure, the average diameter and the particle diameter may be measured using a laser diffraction method. The laser diffraction method generally enables the measurement of particle diameters ranging from the submicron region to several nm, which enables results with high reproducibility and high resolution to be obtained.

The average diameter of the second binder particles is 10 or more times larger than the average diameter of the first binder particles. According to one embodiment of the present disclosure, the average diameter of the second binder particles may be 10 to 30 times or 10 to 20 times larger than the average diameter of the first binder particles.

In addition, in the present specification, the adhesive strength between the separator and an electrode means the force required to separate the separator and the electrode, which are in a mixed state, from each other. In this case, the adhesive strength measured when the separator and the electrode are mixed but before being immersed in an electrolyte is defined as dry adhesive strength. The adhesive strength measured after the separator and the electrode are mixed and then immersed in an electrolyte is defined as wet adhesive strength. An electrode assembly in which the separator and the electrode are mixed is embedded in a battery case and then injected into the electrolyte to manufacture a final battery. For this reason, the adhesive strength between the separator and the electrode needs to be sufficiently maintained even when immersed in the electrolyte.

Here, typically in the case of the dry adhesive strength of the separator, when the binder is distributed on a surface layer of the separator, a predetermined or higher level of dry adhesive strength may be obtained. In the case of the wet adhesive strength of the separator, the adhesive strength is required to be maintained even when injecting the electrolyte after mixing the separator and the electrode. For this reason, a binder layer needs to be maintained on the surface layer even after injecting the electrolyte.

In the separator of the present disclosure, the average diameter of the first binder particles in the first porous coating layer is 10 times smaller than that of the second binder particles in the second porous coating layer, so the adhesive strength of the separator in a wet state is lowered. However, in the case of the second porous coating layer containing the second binder particles having a large average diameter, the average diameter of the second binder particles may be controlled to be larger than that of the second inorganic particles. Thus, the second binder particles may be prevented from being infiltrated (soaked) between the second inorganic particles.

On the other hand, when applying particles having a large average diameter, such as the second binder particles, to the porous coating layers on both sides of the separator, it may be advantageous in terms of the adhesive strength between the separator and the electrode, but may be inferior in terms of other physical properties (resistance and air permeability) and the like. As a result, it may be disadvantageous in terms of long-term performance of an electrochemical device including such a separator.

Therefore, in the present disclosure, the first and second porous coating layers are disposed on both sides of the separator, respectively. In addition, the average diameter of the second binder particles contained in the second porous coating layer is controlled to be 10 or more times larger than the average diameter of the first binder particles contained in the first porous coating layer. As a result, after laminating the separator and the electrode, an effect of improving both dry adhesive strength and wet adhesive strength may be exhibited.

In one embodiment of the present disclosure, the separator and the electrode (cathode or anode) are cut into a size of 25 mm X 100 mm for preparation. Next, the prepared separator and electrode are overlapped, put in between a 100-pm-thick polyethylene terephthalate (PET) film, and then heated and compressed at a pressure of 6.5 MPa at a temperature of 60°C for 1 second, using a flatbed press, for adhesion. After the separator and electrode being adhered are attached to a slide glass using a double-sided tape, one end of the adhesive surface of the separator (within 10 mm from the end of the adhesive surface) is torn out and then attached to be connected lengthwise, using a PET film having a size of 25 mm X 100 mm and a single-sided adhesive tape. The slide glass is mounted on a lower holder of a UTM instrument (LLOYD Instrument LF Plus), and the PET film to which the separator is attached is mounted on an upper holder of the UTM instrument. Then, a force is applied at an angle of 180° at a measurement speed of 300 mm/min to measure the dry adhesive strength as a force required to peel off the electrode and the electrode-facing porous coating layer.

In addition, the separator is interposed between the cathode and the anode to prepare an electrode assembly. Next, the electrode assembly is embedded in a battery pouch case, and the electrolyte is then injected to manufacture a battery. The battery is subjected to an activation process. After completion of the activation process, the electrode assembly is taken out from the battery pouch, and the electrode assembly is mounted on UTM equipment (LLOYD Instrument LF PLUS). Next, the interface between the anode and the separator is peeled off at a speed of 300 mm/min at an angle of 180° to measure the wet adhesive strength as a peel strength. In this case, the battery activation process may be performed by initially charging the battery at a SOC level in a range of 10% to 50% and leaving the same at a temperature in a range of 40°C to 80°C for 12 hours to 48 hours. On the other hand, room-temperature aging may be performed for a predetermined period after the initial charging and before high-temperature aging, as needed. The room-temperature aging may be, for example, performed by a method in which the initially charged battery is left at room temperature for 1 day to 6 days. When performing the room-temperature aging process as described above, the electrolyte may be sufficiently wetted in between the electrode and the separator.

According to one embodiment of the present disclosure, the dry adhesive strength may be 30 gf/25mm or more, 50 gf/25mm or more, or in a range of 35 gf/25mm to 50 gf/25 mm. In addition, the wet adhesive strength may be 5 gf/25mm or more, 10 gf/25mm or more, or in a range of 7 gf/25mm to 10 gf/25mm.

The average diameter of the first binder particles may be 0.5 µm or smaller or in a range of 0.3 um to 0.5 um. In addition, the average diameter of the second binder particles may be 5 µm or more or in a range of 5 um to 10 µm.

The first and second binder particles may be water-based binder polymers. In this case, the water-based binder polymer means a binder polymer capable of being dispersed in water.

According to one embodiment of the present disclosure, the first and second binder particles are each independently any one or a mixture of two or more selected from among a polyacrylic polymer, a polyurethane polymer, and a polyvinyl acetate.

Specifically, the first and second binder particles may each independently include any one or a mixture of two or more selected from among polymethyl methacrylate, polyethylhexyl acrylate, polybutylacrylate, polyacrylonitrile, polyvinyl acetate, a copolymer of butyl acrylate and ethylhexyl acrylate, an ethylene-co-vinyl acetate copolymer, and polyarylate, but are not limited thereto.

In the present disclosure, the first and second inorganic particles are not particularly limited as long as the inorganic particles are electrochemically stable. That is, the first and second inorganic particles available in the present disclosure are not particularly limited unless oxidation and/or reduction reactions occur in the operating voltage range (for example, in a range of 0 V to 5 V based on Li/Li+) of the electrochemical device to which the inorganic particles are applied. In particular, using inorganic particles having a high dielectric constant as the first and second inorganic particles may contribute to an increase in the degree of dissociation of an electrolyte salt in a liquid electrolyte, for example, a lithium salt, thereby improving the ionic conductivity of the electrolyte.

For the reasons described above, the first and second inorganic particles may be inorganic particles having a dielectric constant of 5 or higher, inorganic particles having lithium-ion transport capability, and mixtures thereof.

The inorganic particles having a dielectric constant of 5 or more may be one or a mixture of two or more selected from the group consisting of Al₂O₃, SiO₂, ZrO₂, AlOOH, TiO₂, BaTiO₃, Pb (ZrₓTi₁₋ₓ)O₃ (PZT, where 0 < x < 1), Pb₁₋ₓLaₓZr_{1-y}Ti_{y}O₃ (PLZT, where 0 < x < 1 and 0 < y < 1), (1-x)Pb(Mg_{1/3}Nb_{2/3})O₃₋ₓPbTiO₃ (PMN-PT, where 0 < x < 1), hafnia (HfO₂), SrTiO₃, SnO₂, CeO₂, MgO, NiO, CaO, ZnO, ZO₃, and SiC.

The inorganic particles having lithium-ion transport capability may be one or a mixture of two or more selected from the group consisting of lithium phosphate (Li₃PO₄), lithium titanium phosphate (LiₓTi_{y}(PO₄)₃, where 0 < x < 2 and 0 < y < 3), lithium aluminum titanium phosphate (LiₓAl_{y}Ti_{z}(PO₄)₃, where 0 < x < 2, 0 < y < 1, and 0 < z < 3), (LiAlTiP)ₓO_{y} series glass (where 0 < x < 4 and 0 < y < 13), lithium lanthanum titanate (LiₓLa_{y}TiO₃, where 0 < x < 2 and 0 < y < 3), lithium germanium thiophosphate (LiₓGe_{y}P_{z}S_{w}, where 0 < x < 4, 0 < y < 1, 0 < z < 1, and 0 < w < 5), lithium nitride (LiₓN_{y}, where 0 < x <4 and 0 < y < 2), SiS₂ series glass (LiₓSi_{y}S_{z}, where 0 < x < 3, 0 < y < 2, and 0 < z < 4), and P₂S₅ series glass (LiₓP_{y}S_{z}, where 0 < x < 3, 0 < y < 3, and 0 < z < 7).

The average diameters of the first and second inorganic particles are not particularly limited, but are preferably in a range of 0.001 um to 4 µm, more preferably in a range of 100 nm to 700 nm, and even more preferably in a range of 150 nm to 600 nm for the formation of the porous coating layers with a uniform thickness and an appropriate porosity.

In addition, according to one embodiment of the present disclosure, the average diameter of the second binder particles may be larger than the average diameter of the second inorganic particles. When the average diameter of the second binder particles is controlled to be larger than the average diameter of the second inorganic particles, the second binder particles are unlikely to be infiltrated (soaked) between the second inorganic particles, and thus may be disposed on the surface of the obtained second porous coating layer. As a result, the second porous coating layer may exhibit excellent properties in terms of not only the dry adhesive strength between the electrode but also the wet adhesive strength to the electrode.

A weight ratio of the first inorganic particles to the first binder particles and a weight ratio of the second inorganic particles to the second binder particles, respectively, in the first and second porous coating layers, may be, for example, in a range of 50:50 to 70:30, or a range of 60:40 to 70:30. When the weight ratio of the first inorganic particles to the first binder particles and the weight ratio of the second inorganic particles to the second binder particles each independently satisfy the above numerical ranges, problems of decreases in porosity and pore size of the porous coating layer caused by large amount of the binder particles are preventable. In addition, a problem of a deterioration in the peeling resistance of the porous coating layer caused by small amount of the binder particles may also be solved.

According to one embodiment of the present disclosure, the first and second porous coating layers may further include other additives in addition to the aforementioned inorganic particles and binder particles.

The first and second porous coating layers may each independently have a thickness that is not particularly limited but may be in a range of 1 um to 10 µm or a range of 1.5 µm to 6 um. In addition, the first and second porous coating layers may each independently have a porosity that is also not particularly limited but may be in a range of 35% to 65%.

According to one embodiment of the present disclosure, in addition to the aforementioned first and second binder particles, the first and second porous coating layers may each independently include polyvinylidene fluoride-co-hexafluoropropylene, polyvinylidene fluoride-co-trichloroethylene, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, and the like.

In the separator according to one aspect of the present disclosure, the porous polymer substrate may be specifically a porous polymer film substrate or a porous polymer nonwoven fabric substrate.

The porous polymer film substrate may be a porous polymer film made of polyolefin, such as polyethylene or polypropylene. In addition, such a polyolefin porous polymer film substrate exhibits a shutdown function, for example, at a temperature in a range of 80°C to 130°C.

In this case, the polyolefin porous polymer film may be formed from a polyolefin-based polymer such as polyethylene, such as high-density polyethylene, linear low-density polyethylene, low-density polyethylene, and ultra-high-molecular-weight polyethylene, polypropylene, polybutylene, polypentene, and the like, alone or a polymer mixture of two or more thereof.

In addition, the porous polymer film substrate may be manufactured by molding various polymers, such as polyester, in addition to polyolefin, into a film form. In addition, the porous polymer film substrate may be formed in a structure in which two or more film layers are laminated. Each film layer may be formed from the aforementioned polymer, such as polyolefin, polyester, and the like, alone or a polymer mixture of two or more thereof.

In addition, the porous polymer film substrate and the porous nonwoven fabric substrate may be formed from polyethylene terephthalate, polybutylene terephthalate, polyester, polyacetal, polyamide, polycarbonate, polyimide, polyether ether ketone, polyethersulfone, polyphenylene oxide, polyphenylene sulfide, polyethylene naphthalene, and the like, alone or a polymer mixture thereof, in addition to the polyolefin-based polymers as described above.

The porous polymer substrate may have a thickness that is not particularly limited but may be in a range of 1 µm to 100 um, or a range of 5 µm to 50 um. In addition, the porous polymer substrate may have a pore size and a porosity that are also not particularly limited but may be in a range of 0.01 um to 50 um and a range of 10% to 95%, respectively.

According to one aspect of the present disclosure, provided is a method of manufacturing a separator characterized by including: preparing a first slurry for a first porous coating layer, the first slurry containing a plurality of first inorganic particles, first binder particles, and a first dispersion medium, and a second slurry for a second porous coating layer, the second slurry containing a plurality of second inorganic particles, second binder particles, and a second dispersion medium; and applying and drying the first slurry on a first surface of a porous polymer substrate to form the first porous coating layer, and applying and drying the second slurry on a second surface of the porous polymer substrate to form the second porous coating layer, in which an average diameter of the second binder particles is 10 or more times larger than an average diameter of the first binder particles.

First, the first binder particles and the first inorganic particles are dispersed in the first dispersion medium to prepare the first slurry for the first porous coating layer. In addition, the second binder particles and the second inorganic particles are dispersed in the second dispersion medium to prepare the second slurry for the second porous coating layer.

Non-limiting examples of the first and second dispersion media available at this time may include one compound, or a mixture of two or more selected from among water, acetone, tetrahydrofuran, methylene chloride, chloroform, dimethylformamide, N-methyl-2-pyrrolidone, methyl ethyl ketone, and cyclohexane. The first and second dispersion media are preferably water.

The first inorganic particles, the first binder particles, the second inorganic particle, and the second binder particles refer to the above description.

According to one embodiment of the present disclosure, the first slurry may have a viscosity of 15 cp or lower, or in a range of 10 cp to 15 cp. When the viscosity of the first slurry falls within the above numerical range, surface migration of the first binder particles may be maximized due to a difference in density between the first binder particles and the first inorganic particles. Thus, phase separation between the first binder particles and the first inorganic particles may be facilitated, which is advantageous.

In the case of the second slurry, the average diameter of the second binder particles is large compared to the case of the first slurry. In addition, as described above, the average diameter of the second binder particles may be controlled to be larger than the average diameter of the second inorganic particles. Therefore, even when the second slurry containing the plurality of second inorganic particles, the second binder particles, and the second dispersion medium has a high viscosity, the second binder particles may be distributed on the surface of the obtained second porous coating layer. As a result, wet adhesive strength and dry adhesive strength between the second porous coating layer and the electrode may be obtained. According to one embodiment of the present disclosure, the second slurry may have a viscosity of 15 cp or lower or in a range of 10 cp to 15 cp, which is equivalent to the aforementioned viscosity of the first slurry.

In addition, in the preparing of the second slurry, the second binder particles and the second dispersion medium contained in the second slurry may be mixed for 2 or more turns, or 2 to 3 turns.

Here, one-turn mixing means that the number of times the slurry to be mixed is allowed to pass through a mixing device, such as a bead mill, is once.

By being mixed for 2 or more turns as described above, the inorganic particles and the binder particles are evenly distributed on the slurry, so that the uniformity of the finally obtained second porous coating layer may be improved.

Thereafter, the first slurry is applied and dried on the first surface of the porous polymer substrate to form the first porous coating layer. In addition, the second slurry is applied and dried on the second surface of the porous polymer substrate to form the second porous coating layer.

A method of applying the slurries for the first and second porous coating layers to the porous polymer substrate is not particularly limited, but slot coating, dip coating, or the like may be applied. Slot coating is a method of applying a slurry supplied through a slot die on the entire surface of a substrate, which enables control of coating layer thickness according to the flow supplied from a metering pump. In addition, dip coating is a method of immersing a substrate in a slurry-containing tank for coating, which enables control of coating layer thickness according to slurry concentration and the speed at which the substrate is taken out of the slurry tank. In addition, for further accurate control of coating thickness, a Meyer bar and the like may be used after immersing the substrate for subsequent measurement.

The porous polymer substrate coated with the slurries for the porous coating layers may be dried using a dryer, such as an oven, to form the first and second porous coating layers formed on at least one surface of the porous polymer substrate.

In the first (second) porous coating layer, the first (second) inorganic particles are charged and bound to each other by the first (second) binder particles in a state of being in contact with each other. As a result, interstitial volumes may be formed between the inorganic particles, and the interstitial volumes formed between the inorganic particles may become empty spaces to form pores.

That is, the first (second) binder particles may attach the first (second) inorganic particles to each other such that the first (second) inorganic particles remain attached to each other, and for example, the binder polymer may connect and fix the inorganic particles to each other. In addition, the pores of the porous coating layer are pores formed by the interstitial volumes between inorganic particles becoming empty spaces, which are spaces substantially intersected by the inorganic particles in a closely packed or densely packed structure formed by the inorganic particles.

An electrochemical device, according to one aspect of the present disclosure, includes a cathode, an anode, and a separator interposed between the cathode and the anode, in which the separator is the separator according to one embodiment of the present disclosure described above.

Such an electrochemical device includes all devices that undergo electrochemical reactions. Specific examples thereof include all types of primary and secondary cells, fuel cells, solar cells, capacitors, such as supercapacitor devices, and the like. In particular, in all these secondary batteries, the electrochemical device is preferably a lithium secondary battery including a lithium-metal secondary battery, a lithium-ion secondary battery, a lithium polymer secondary battery, or a lithium-ion polymer secondary battery.

Both electrodes of the cathode and anode to be applied with the separator of the present disclosure are not particularly limited, and may be manufactured in a form in which an electrode active material is bonded to an electrode current collector by typical methods known in the art. As non-limiting examples of a cathode active material among the electrode active materials, typical cathode active materials available in cathodes of existing electrochemical devices may be used. In particular, lithium manganese oxide, lithium cobalt oxide, lithium nickel oxide, lithium iron oxide, or a lithium composite oxide in combination thereof is preferable. As non-limiting examples of an anode active material, typical anode active materials available in anodes of existing electrochemical devices may be used. In particular, lithium adsorption material, such as lithium metal, lithium alloy, carbon, petroleum coke, activated carbon, graphite, or other carbon materials, are preferable. Non-limiting examples of a cathode current collector may include aluminum, nickel, or a foil produced from a combination thereof. In addition, non-limiting examples of an anode current collector may include copper, gold, nickel, copper alloys, or a foil produced from a combination thereof.

The electrolyte available in the electrochemical device of the present disclosure is preferably one in which a salt having a structure such as A⁺B⁻, where A⁺ includes an alkali metal cation such as Li⁺, Na⁺, and K⁺, or an ion composed of combinations thereof, and B⁻ includes an anion such as PF₆⁻, BF₄⁻, Cl-, Br-, I⁻, ClO₄⁻, AsF₆⁻, CH₃CO₂⁻, CF₃SO₃⁻, N(CF₃SO₂)₂⁻, and C(CF₂SO₂)₃⁻, or an ion composed of combinations thereof, is dissolved or dissociated in an organic solvent composed of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (g-butyrolactone), or a mixture thereof. However, the present disclosure is not limited thereto.

The injection of the electrolyte may be performed at an appropriate step in the battery manufacturing process according to the manufacturing process and the required physical properties of the final product. That is, it may be applied before battery assembly or at the final step of battery assembly.

According to one embodiment of the present disclosure, in the electrochemical device, the second porous coating layer of the separator may face the anode. When the second porous coating layer containing the second binder particles, which have an average diameter larger than the first binder particles in the first porous coating layer, faces the anode as described above, insufficient wet adhesive strength in a portion between the anode may be improved by using the second binder particles having a large average diameter in the second porous coating layer. That is, as described above, the average diameter of the second binder particles is 10 or more times larger than the average diameter of the first binder particles. As a result, the average diameter of the second binder particles may be controlled to be larger than the average diameter of the second inorganic particles included in the second porous coating layer. Thus, the second binder particles are unlikely to be infiltrated between the second inorganic particles and may be disposed on the surface of the second porous coating layer. Therefore, the dry adhesive strength and the wet adhesive strength between the second porous coating layer and the anode may be greatly improved.

Hereinafter, the present disclosure will be described in detail through examples. However, the examples of the present disclosure may be modified in many other forms, and the scope of the present disclosure should not be construed as being limited to the following examples. The examples of the present disclosure are provided to fully explain the present disclosure to those skilled in the art to which the present disclosure pertains.

### Example 1

### Preparation of first slurry for first porous coating layer

As first inorganic particles, alumina having an average diameter (D50) of 500 nm and a density of 6 g/cm³ was used, and as first binder particles, polymethyl methacrylate having an average diameter (D50) of 250 nm (having a 35 wt% of non-volatile phase) was used. The first inorganic particles and first binder particles were added to distilled water at a ratio of 80:20, and then mixed in a bead mill for 1 turn to prepare a first slurry for a first porous coating layer, which had a viscosity of 15 cP.

### Preparation of second slurry for second porous coating layer

As second inorganic particles, alumina having an average diameter (D50) of 500 nm and a density of 6 g/cm³ was used, and as second binder particles, polymethyl methacrylate having an average diameter (D50) of 5 um was used. The second inorganic particles and the second binder particles were added to distilled water at a ratio of 80:20, and then mixed in a bead mill for 2 turns to prepare a second slurry for a second porous coating layer, which had a viscosity of 15 cP.

### Preparation of porous polymer substrate

A polyethylene film (PE) having a thickness of 9 µm was used as a porous polymer substrate.

### Manufacture of separator

Both sides of the polyethylene film were coated with the slurries for the first and second porous coating layers, respectively, using a doctor blade, and then dried using a hot air blower to form porous coating layers each independently having a coating thickness of 2.5 um. As a result, a separator having a total thickness of about 14 µm was manufactured.

### Example 2

A separator was manufactured in the same manner as in Example 1, except that the first binder particles having an average diameter (D50) of 500 nm were used, and the second binder particles having an average diameter (D50) of 5 um were used.

### Example 3

A separator was manufactured in the same manner as in Example 1, except that the first binder particles having an average diameter (D50) of 150 nm were used, and the second binder particles having an average diameter (D50) of 2 um were used.

### Comparative Example 1

A separator was manufactured in the same manner as in Example 1, except that the first binder particles having an average diameter (D50) of 250 nm were used, and the second binder particles having an average diameter (D50) of 1 um were used.

### Comparative Example 2

A separator was prepared in the same manner as in Example 1, except that the first binder particles having an average diameter (D50) of 150 nm were used, and the second binder particles having an average diameter (D50) of 500 nm were used.

### Comparative Example 3

A separator was prepared in the same manner as in Example 1, except that the first inorganic particles, the binder particles, and a thickener were put into the first slurry in a weight ratio of 75:20:5 so that the slurry had a viscosity of 20 cP.

### Comparative Example 4

A separator was prepared in the same manner as in Example 1, except that the particles were mixed in the bead mill for only 1 turn when preparing the second slurry.

### Experimental Example 1. Examination of separator physical properties

Thickness and air permeability (Gurley) of the separators according to Examples 1 to 3 and Comparative Examples 1 to 4 were examined. The results thereof are shown in Table 1 below.

### Measurement of air permeability (Gurley)

EG01-55-1MR model purchased from Asahi Seiko was used as an air permeability measuring device. The separators manufactured in Examples and Comparative Examples were fixed to the upper and lower hollow-form tips of the air permeability measuring device. The time required for 100 cc of air to pass through the separator was measured through a set differential pressure applied to the upper and lower tips.

### Experimental example 2. Measurement of separator adhesive strength

Dry adhesive strength and wet adhesive strength of the separators according to Examples 1 to 3 and Comparative Examples 1 to 4 were measured. The results thereof are shown in Table 1 below.

### Measurement of dry adhesive strength

A anode in which a copper foil was coated with a carbon-based anode mixture and each of the separators manufactured in Examples and Comparative Examples were each independently cut into a width of 25 mm and placed to overlap each other.

Then, compression was performed using hot press equipment under conditions: a temperature of 60°C, a pressure of 6.5 MPa, and a duration of 1 second. As a result, each sample was prepared for the measurement of electrode adhesive strength.

To measure the adhesive strength between the anode and the separator, a 180° peel test was performed at a speed of 300 mm/min using UTM equipment purchased from Instron.

### Measurement of wet adhesive strength

A cathode in which an aluminum foil was coated with a cathode mixture and each of the separators manufactured in Examples and Comparative Examples were each independently cut into a width of 20 mm, and put into a pouch. Then, a carbonate-based electrolyte was injected.

Compression was performed on the pouch under conditions: a force of 5 kgf, a temperature of 70°C, and a duration of 4 minutes. As a result, each sample was prepared for the measurement of electrode adhesive strength.

To measure the adhesive strength between the cathode and the separator, a 90° peel test was performed at a speed of 200 mm/min using UTM equipment purchased from Instron.

**[Table 1]**

| | Example 1 | Example 2 | Example 3 | Compara tive Example 1 | Compara tive Example 2 | Compara tive Example 3 | Compara tive Example 4 |
|---|---|---|---|---|---|---|---|
| (Average diameter of second binder particles) / (A verage diameter of first binder particles) | 20 | 10 | 13.3 | 4 | 3.3 | 20 | 20 |
| Viscosity of first slurry for first porous coating layer (cP) | 15 | 15 | 15 | 25 | 15 | 20 | 25 |
| Number of turns for mixing slurry for second porous coating layer (turns) | 2 | 2 | 2 | 2 | 2 | 2 | 1 |
| Thickness of separator (µm) | 14.3 | 14.2 | 14.5 | 14.1 | 14.3 | 13.9 | 14.2 |
| Air permeability (Gurley, s/100cc) | 115 | 110 | 120 | 130 | 135 | 140 | 135 |
| Dry adhesive strength (gf/20mm) | 35 | 30 | 40 | 20 | 15 | 20 | 20 |
| Wet adhesive strength (gf/20mm) | 7 | 5 | 6 | 3 | 1 | 2 | 1 |

## Claims

1. A separator comprising:
a porous polymer substrate having a plurality of pores;
a first porous coating layer disposed on a first surface of the porous polymer substrate and comprising a plurality of first inorganic particles and first binder particles disposed on a part or all of the surface of the first inorganic particles to connect and fix the first inorganic particles to each other; and
a second porous coating layer disposed on a second surface of the porous polymer substrate and comprising a plurality of second inorganic particles and second binder particles disposed on a part or all of the surface of the second inorganic particles to connect and fix the second inorganic particles to each other,
wherein an average diameter of the second binder particles is 10 or more times larger than an average diameter of the first binder particles.

2. The separator of claim 1, wherein the average diameter of the second binder particles is 10 to 30 times larger than the average diameter of the first binder particles.

3. The separator of claim 1, wherein the first and second binder particles are each independently a water-based binder polymer.

4. The separator of claim 1, wherein the first and second binder particles are each independently any one or a mixture of two or more selected from among a polyacrylic polymer, a polyurethane polymer, and a polyvinyl acetate.

5. The separator of claim 1, wherein the first binder particles have an average diameter of 0.5 um or smaller, and
the second binder particles have an average diameter of 5 µm or larger.

6. A method of manufacturing a separator, the method comprising:
preparing a first slurry for a first porous coating layer, the first slurry comprising a plurality of first inorganic particles, first binder particles, and a first dispersion medium, and a second slurry for a second porous coating layer, the second slurry comprising a plurality of second inorganic particles, second binder particles, and a second dispersion medium; and
applying and drying the first slurry on a first surface of a porous polymer substrate to form the first porous coating layer, and applying and drying the second slurry on a second surface of the porous polymer substrate to form the second porous coating layer,
wherein an average diameter of the second binder particles is 10 or more times larger than an average diameter of the first binder particles.

7. The method of claim 6, wherein the first slurry has a viscosity of 15 cp or lower.

8. The method of claim 6, wherein the second slurry has a viscosity of 15 cp or lower.

9. The method of claim 6, wherein in the preparing of the second slurry, the second binder particles and the second dispersion medium comprised in the second slurry are mixed for 2 or more turns.

10. An electrochemical device comprising:
a cathode;
an anode; and
a separator interposed between the cathode and the anode,
wherein the separator is the separator of any one of claims 1 to 5.

11. The electrochemical device of claim 10, wherein the electrochemical device is a lithium secondary battery.

12. The electrochemical device of claim 10, wherein the second porous coating layer of the separator faces the anode.
